(19) Europäisches Patentamt

European Patent Office

Office européen des brevets

(11) **EP 2 012 069 A1**

(12) **EUROPEAN PATENT APPLICATION**

(43) Date of publication:
**07.01.2009 Bulletin 2009/02**

(51) Int Cl.:
*F24F 11/00* (2006.01)      *F24F 11/06* (2006.01)
*F25B 49/02* (2006.01)

(21) Application number: **07425350.1**

(22) Date of filing: **04.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **RHOSS S.p.A.**
**45031 Arqua' Polesine (IT)**

(72) Inventors:
• **Zen, Alessandro**
**45100 Rovigo (IT)**
• **Cecchinato, Luca**
**35131 Padova (IT)**

• **Beghi, Alessandro**
**35126 Padova (IT)**
• **Bodo, Cristian**
**35030 Rubano (IT)**
• **Scodellaro, Alessandro**
**33033 Codroipo (IT)**
• **Albieri, Michele**
**35030 San Vito al Tagliamento (IT)**

(74) Representative: **Jorio, Paolo et al**
**STUDIO TORTA**
**Via Viotti 9**
**10121 Torino (IT)**

(54) **Method for regulating the delivery temperature of a service fluid in output from a refrigerating machine**

(57)      In a refrigerating machine (3) for an air-conditioning system (1), which is equipped with one or more fan coils (2) and a hydronic circuit (15) having a delivery branch (16) for the circulation of a service fluid (5) from the refrigerating machine (3) to the fan coils (2) and a return branch (17) for the return of the service fluid (5) in input to the refrigerating machine (3), a delivery temperature measurement (TDLV) is compared (102, 103) with a pair of temperature thresholds (TLOW, THIG) positioned in a certain manner with respect to set point temperature (TSET), the compressor (12) of the machine (3) is switched on and off (104, 105) on the basis of this comparison such that the delivery temperature (TDLV) converges to the set point (TSET), and the position of the thresholds (TLOW, THIG) with respect to the set point (TSET) is adjusted (109, 111-113) as a function of an estimate of the cooling/heating load (FL) of the service circuit (15).

Fig. 1

EP 2 012 069 A1

**Description**

The present invention concerns a method for regulating the delivery temperature of a service fluid in output from a refrigerating machine.

In particular, the present invention finds useful, but not exclusive, application in the regulation of the delivery temperature of a service fluid in output from a water chiller for centralized air-conditioning systems, to which the following description shall make explicit reference without, however, any loss of generality.

As is known, a centralized air-conditioning system for the control of the ambient temperature in a building comprises a plurality of fan coils, which are opportunely distributed inside the building and connected with each other via a hydraulic circuit, and a centralized refrigerating machine suited to cool a service fluid, in particular a coolant liquid substantially composed of water, and to convey this service fluid to the various fan coils via said hydraulic circuit.

This refrigerating machine, normally indicated by the term "chiller", comprises an internal circuit in which a working fluid consisting of a refrigerant circulates, an output circuit that connects to the hydraulic circuit of the air-conditioning system in correspondence to an inlet and an outlet of the refrigerating machine, a heat exchanger through which the internal circuit and the output circuit pass for heat exchange between the working fluid and the service fluid, and one or more compressors for implementing a refrigeration cycle on the working fluid through compression of the same working fluid itself.

Electronic control systems are also known of for controlling the switching on and off of the compressors such that the temperature of the service fluid in input to or output from the refrigerating machine, namely the return temperature or, respectively, the delivery temperature of the service fluid, reaches a predetermined set point value.

These control systems essentially implement a proportional type of control logic in which the switching on and off of the compressors is carried out on the basis of a direct comparison between a measurement of the return or delivery temperature of the service fluid and a pair of temperature thresholds.

The above-mentioned control systems exhibit intrinsic limits due to the time constraints between the moments of switching the compressors on and off for the purpose of extending their life. In actual fact, these constraints limit the differential between the temperature thresholds to a minimum value, below which the compressors would operate in technically prohibitive running conditions that could damage them. More in general, on the one hand these time constraints prevent the mentioned control systems from achieving a good level of precision in regulating the temperature of the service fluid and, on the other, from maximizing the energy efficiency of the air-conditioning system.

The object of the present invention is to provide a method for regulating the delivery temperature of a service fluid in output from a refrigerating machine for an air-conditioning system and to create a control device for a refrigerating machine embodying this method, which permit regulation of the delivery temperature in a precise manner and maximization of the system's energy efficiency and, at the same time, are of straightforward and economic embodiment.

According to the present invention, a method for regulating the delivery temperature of a service fluid in output from a refrigerating machine, a control device for a refrigerating machine and a refrigerating machine in accordance with the attached claims are provided.

The present invention shall now be described with reference to the attached drawings, which illustrate a non-limitative example of embodiment, in which:

- Figure 1 shows a block diagram of an air-conditioning system comprising a refrigerating machine equipped with a control device in accordance with the present invention;
- Figures 3 to 6 show a flow chart of the method for regulating delivery temperature set point for a service fluid in output from the refrigerating machine in Figure 1 in accordance with the present invention; and

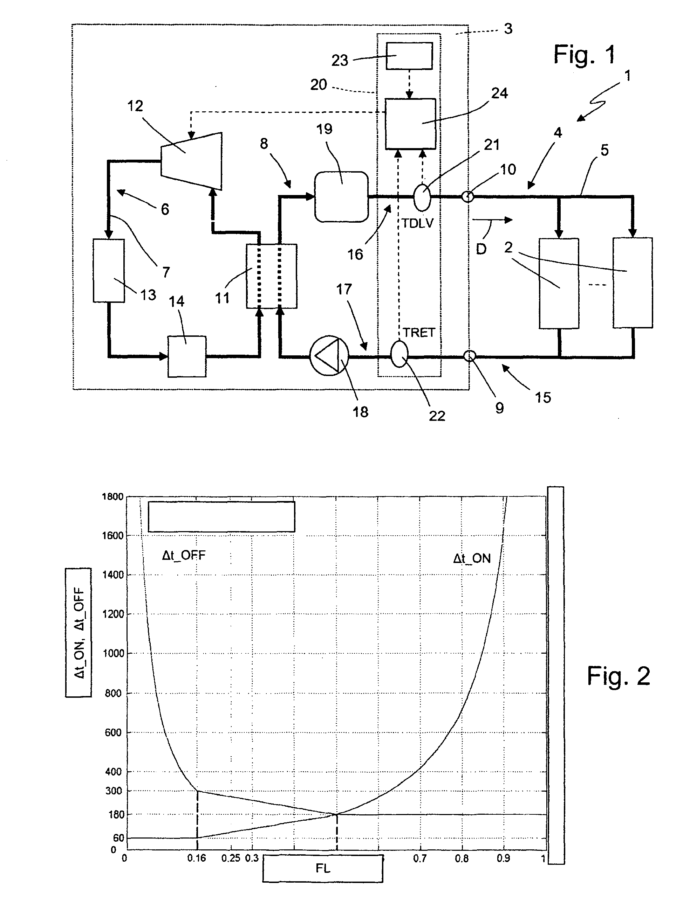

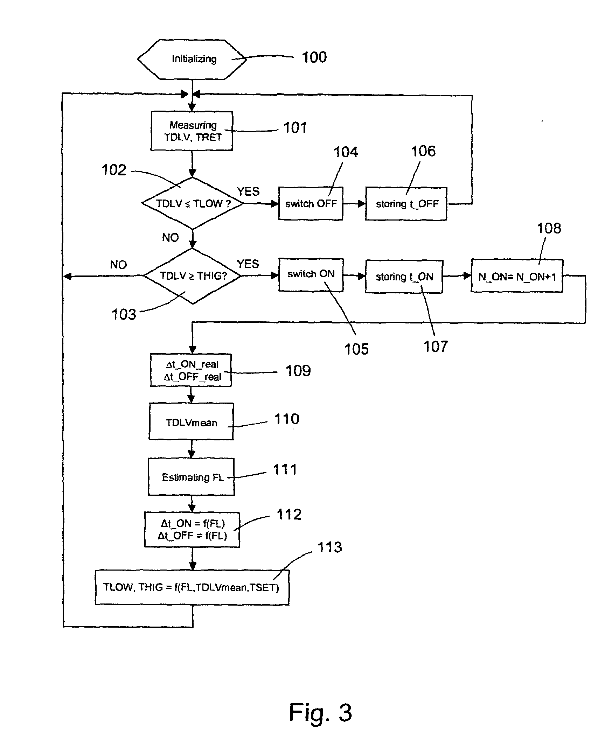

- Figure 2 shows a calculation curve utilized in certain steps of the flow chart in Figures 3 to 6.

In Figure 1, reference numeral 1 generally designates a block diagram showing the principles of an air-conditioning system comprising a plurality of fan coils 2 opportunely distributed inside a building (not shown) for which it is wished to control the ambient temperature, and a refrigerating machine 3 suited to cool a service fluid 5, in particular a coolant liquid substantially composed of water, and make it circulate through a hydraulic circuit 4 that connects the fan coils 2 to the refrigerating machine 3 itself.

Typically, the refrigerating machine 3 comprises an internal circuit 6, in which a working fluid 7 consisting of a refrigerant circulates, and an output circuit 8, which connects to the hydraulic circuit 4 of the system 1 in correspondence to an inlet 9 and an outlet 10 of the refrigerating machine 3. A series of devices are arranged along the internal circuit 6 to implement a refrigeration cycle on the working fluid 7, and in particular, a first heat exchanger 11 through which the internal circuit 6 and the output circuit 8 pass, and which functions as an evaporator to make the working fluid 7 evaporate at low pressure by absorbing heat from the service fluid 5; a compressor 12, preferably of the scroll type, to carry out adiabatic compression on the working fluid 7 in the vapour state; a second heat exchanger 13 functioning as a condenser, that is to make the working fluid 7 condense so as to release the previously absorbed heat to the outside; and an expansion valve 14 to cool the working fluid 7 and make it partially evaporate so that it is ready for another cycle.

The hydraulic circuit 4 of the system 1 and the output circuit 8 of the refrigerating machine 3 form a so-called hydronic circuit 15, comprising a delivery branch 16, along which the service fluid 5 circulates in a direction D from the heat exchanger 11 to the fan coils 2, and a return branch 17, along which the service fluid 5 returns to the heat exchanger 11. Circulation of the service fluid 5 in direction D is guaranteed by a pump 18 placed along the return branch 17.

The refrigerating machine 3 is equipped with a storage tank 19 placed along the delivery branch 16 at a short distance from the heat exchanger 11 to produce thermal inertia in the hydronic circuit 15, which slows the dynamics of the system 1 so as to avoid undesired oscillation phenomena in the regulator valves (not shown) of the fan coils 2. The presence of the storage tank 19 is optional.

In addition, the refrigerating machine 3 comprises a control device 20 to control the switching on and off of the compressor 12 based on the delivery temperature TLDV of the service fluid 5.

More in detail, the control device 20 comprises a first temperature sensor 21 placed along the delivery branch 16 at the outlet of the storage tank 19, or rather at the outlet 10 of the refrigerating machine 3, to measure the delivery temperature TDLV of the service fluid 5, a second temperature sensor 22 placed along the return branch 17 in correspondence to the inlet 9 of the refrigerating machine 3 to measure the return temperature TRET of the service fluid 5, a keypad 23 to accept commands given by a user, and an electronic control unit 24 connected to the sensors 21 and 22, the keypad 23 and the compressor 12.

The electronic control unit 24 is suited to control the switching on and off of the compressor 12 based on a comparison between a measurement of the delivery temperature TDLV and a pair of delivery temperature thresholds such that the delivery temperature TDLV converges to a delivery temperature set point TSET between the two delivery temperature thresholds.

The electronic control unit 24 is configured to implement the method for regulating the delivery temperature TDLV of the service fluid 5 in accordance with the present invention, which method is described below for the case in which the service fluid 5 is chilled to cool the environments where the fan coils 2 are placed.

According to the present invention, the temperature thresholds are comprised of a lower threshold TLOW and an upper threshold THIG linked to the set point TSET according to the relations:

$$\mathrm{THIG\ =\ TSET\ +\ DM \cdot R;} \qquad\qquad (1)$$

$$\mathrm{TLOW\ =\ TSET\ -\ DM \cdot (1-R),} \qquad\qquad (2)$$

where DM is the temperature differential between the two delivery temperature thresholds and R is a ratio, henceforth called the distribution ratio, between 0 and 1, which defines the ratio in which the differential DM is distributed between the two thresholds with respect to the set point TSET, so as to make them symmetrical or more or less asymmetrical with respect to the set point TSET.

Typically, the lower TLOW and upper THIG thresholds are kept symmetrical with respect to the set point TSET when checking the delivery temperature TDLV, i.e. the distribution ratio assumes a value of 0.5.

As can be noted, the relative position of the pair of thresholds TLOW, THIG with respect to the set point TSET can be adjusted by acting on the differential DM and/or the distribution ratio R. In accordance with the present invention, the position of the thresholds TLOW, THIG with respect to the set point TSET is adjusted in function of an estimate of the cooling load. Furthermore, the position of the thresholds TLOW, THIG with respect to the set point TSET are adjusted in function of the measurement of the delivery temperature TDLV.

In a first approximation, the cooling load of the hydronic circuit 15 corresponds to the cooling load produced by the environment to be cooled. The more the cooling load drops, the less the heat exchange between the environment and the fan coils 2, and less is the need to cool the service fluid 5.

The estimated cooling load is provided in terms of fraction of load FL, that is in terms of the ratio between the power that the refrigerating machine 3 must deliver to cool the environment and the maximum refrigeration power that the refrigerating machine 3 can deliver under given nominal conditions.

Switching on and off of the compressor 12 takes place respecting precise time constraints between successive switch-ons and/or switch-offs in order to safeguard the integrity of the compressor 12, or rather respecting a minimum time $\Delta t\_ON\_min$ between switch-on and switch-off, a minimum time $\Delta t\_OFF\_min$ between switch-off and switch-on and a minimum time $\Delta t\_ON\_ON\_min$ between two successive switch-ons. To fulfil these time constraints, during an on-off cycle defined between two successive switch-on events, the compressor 12 should remain switched on and switched off for a theoretical operational period $\Delta t\_ON$ and a theoretical stoppage period $\Delta t\_OFF$ respectively, these periods depending on the estimated fraction of the cooling load FL in the following manner:

$$\Delta t\_ON = \begin{cases} \Delta t\_ON\_min & FL < FL1 \\ \Delta t\_ON\_ON\_min \cdot FL & FL1 \leq FL \leq FL2 \\ \Delta t\_OFF\_min \cdot \dfrac{FL}{1-FL} & FL > FL2 \end{cases} \qquad (3)$$

$$\Delta t\_OFF = \begin{cases} \Delta t\_ON\_min \cdot \dfrac{1-FL}{FL} & FL < FL1 \\ \Delta t\_ON\_ON\_min \cdot (1-FL) & FL1 \leq FL \leq FL2 \\ \Delta t\_OFF\_min & FL > FL2 \end{cases} \qquad (4)$$

where:

$$FL1 = \frac{\Delta t\_ON\_min}{\Delta t\_ON\_ON\_min} \quad \text{and} \quad FL2 = \frac{\Delta t\_OFF\_min}{\Delta t\_ON\_ON\_min}.$$

Figure 2 illustrates the trends of the theoretical periods $\Delta t\_ON$ and $\Delta t\_OFF$ as the fraction of load FL changes for the following time constraints:

- $\Delta t\_ON\_min = 60$ s;
- $\Delta t\_OFF\_min = 180$ s; and
- $\Delta t\_ON\_ON\_min = 360$ s.

The asymptotic trends at the ends of the change interval in the fraction of load FL mean that the compressor 12 remains switched on or off for very long periods corresponding to fractions of load FL close to 1 or 0 respectively.

Figure 3 shows a flow chart that describes to steps followed by the method for regulating the delivery temperature TDLV of the service fluid 5 in accordance with the present invention.

With reference to Figure 3, at the moment of switching on the refrigerating machine 3, the method provides a variables initialization phase (block 100), in which:

- the differential DM is set to a default value DMdef equal to 4.8 °C;
- the distribution ratio R is set to a default value Rdef equal to 0.5; and
- two variables, t_ON and t_OFF, henceforth referred to respectively as the switch-on time and switch-off time of the compressor 12, are set to 0.

The delivery temperature TDLV and the return temperature TRET are measured via the respective sensors 21 and 22 (block 101).

Periodically, a measurement of the delivery temperature TDLV is compared with the lower threshold TLOW (block 102) and the upper threshold THIG (block 103). If the delivery temperature TDLV is less than or equal to the lower threshold TLOW, then the compressor 12 is switched off (block 104). Instead, if the delivery temperature TDLV is greater or equal to the upper threshold THIG, then the compressor 12 is switched on (block 105). The times of the switch-off and switch-on events are stored in the respective variables switch-off time t_OFF (block 106) and switch-on time t_ON (block 107). In addition, on every switch-on event, a counter N_ON of the number of switch-ons is incremented (block 108).

The switch-on event starts the on-off cycle of the compressor 12 and a series of calculations are triggered in correspondence to this event that result in an estimate of the cooling load and the adjustment of the set point TSET and the thresholds TLOW, THIG to the estimated cooling load.

In particular, a real operational period Δt_ON_real, a real stoppage period Δt_OFF_real and a real cycle period Δt_TOT_real, the latter equal to the sum Δt_ON_real + Δt_OFF_real, are calculated for the compressor 12 on the basis of the switch-on t_ON and switch-off t_OFF times, (block 109), and a mean delivery temperature TDLVmean is calculated by averaging the delivery temperature TDLV measurements over the real cycle period Δt_TOT_real (block 110).

The cooling load is estimated in function of the measurements of the delivery TDLV and return TRET temperatures and is provided, as previously disclosed, in terms of an estimated fraction of load FL (block 111).

Once the estimate of the fraction of load FL is made, the theoretical operational period At_ ON and the theoretical stoppage period t_OFF are calculated by relations (3) and (4) respectively, and a theoretical cycle period At_TOT calculated as the sum At_ON + At_OFF (block 112).

At this point, the relative position of the lower TLOW and upper THIG thresholds with respect to the set point TSET is adjusted in function of the fraction of load FL and the mean delivery temperature TDLVmean (block 113).

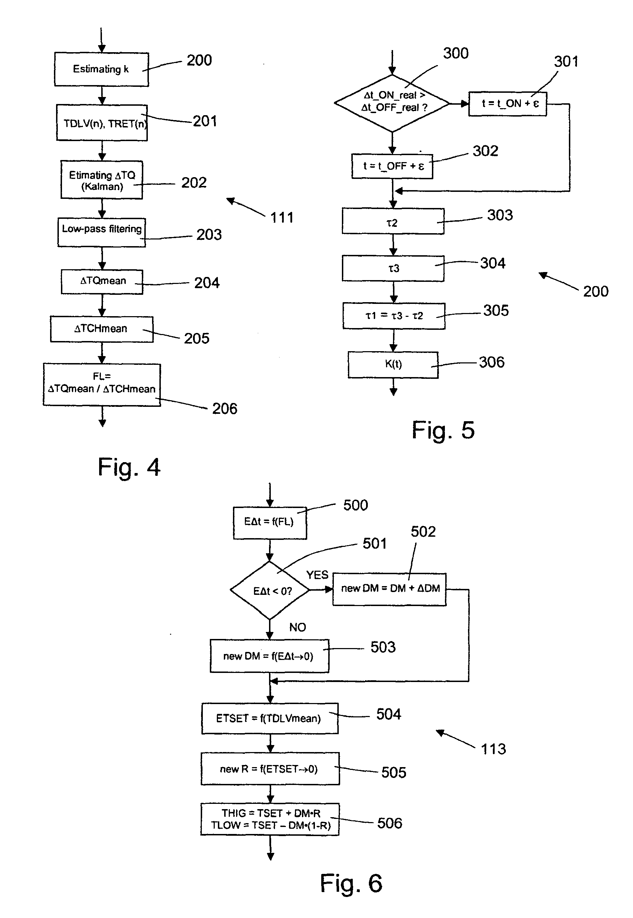

Figure 4 shows a portion of the flow chart regarding block 111 of Figure 3 that shows the sub-phases concerning the calculation of the fraction of load FL of the hydronic circuit 15.

The method is based on the assumption that the system constituted by the system 1 and the environment to be cooled is a thermally insulated system, for which an energy balance equation can be written in terms of temperature of the type:

$$\Delta TQ = TDLV - TRET + k \cdot \frac{dTRET}{dt} \qquad (5)$$

where ΔTQ is the temperature difference between the inlet and outlet of the group of fan coils 2 produced by the thermal power that the environment supplies to the system 1, and k is a parameter, henceforth referred to as the installation parameter, which depends on the capacity and mass flow characteristics of the hydronic circuit 15, and in particular k = ρ·Vtot/m, where ρ is the density of the service fluid 5 expressed in $kg/m^3$, Vtot is the volume of the entire hydronic circuit 15 expressed in $m^3$ and m is the mass flow of the hydronic circuit 15 expressed in kg/s.

In particular, with reference to Figure 4, the method provides for estimating the installation parameter k to tune a successive estimate of the fraction of load FL with the capacity and mass flow characteristics of the hydronic circuit 15 (block 200), and to subsequently acquire samples of delivery TDLV(n) and return TRET(n) temperatures, sampling the outputs of the sensors 21 and 22 with a sampling period ts (block 201) and estimating the temperature difference ΔTQ by processing the delivery TDLV(n) and return TRET(n) temperature samples via a discrete Kalman filter (block 202) that expresses equation (5) as a system in discrete state space (DSS) according to the matrix form

$$\begin{cases} x(n+1) = F \cdot x(n) + G \cdot u(n) \\ y(n) = H \cdot x(n) + J \cdot u(n) \end{cases} \qquad (6)$$

where u(n), x(n) and y(n) are respectively the vectors of the inputs, the states and the outputs of the system at discrete time n, and in which

$$u(n) = \begin{bmatrix} TDLV(n) \\ TRET(n) \end{bmatrix}, \quad x(n) = y(n) = \begin{bmatrix} \Delta TQ(n) \\ TRET(n) \end{bmatrix} \qquad (7)$$

$$F = \begin{bmatrix} 1 & 0 \\ \frac{ts}{k} & 1-\frac{ts}{k} \end{bmatrix}, \quad G = \begin{bmatrix} 0 \\ \frac{ts}{k} \end{bmatrix}, \quad H = \begin{bmatrix} 0 & 1 \end{bmatrix}, \quad J = \begin{bmatrix} 0 \end{bmatrix}. \qquad (8)$$

The transformation of equation (5) in the system defined by (6), (7) and (8) is based on the further assumption that the thermal power released by the environment to the system 1 is constant during the sampling period ts. Therefore, the estimate of the temperature difference ΔTQ is provided in a discrete form ΔTQ(n).

The estimated temperature difference ΔTQ undergoes low-pass filtering (block 203), for example, via a first order Chebyshev filter having a cutoff angular frequency of 0.003 rad/s and peak band-pass ripple of 3dB, and is successively processed to obtain a mean value ΔTQmean for the measured cycle time ΔTCYCLE (block 204).

Finally, a mean value ΔTCHmean is calculated for the temperature difference ΔTCH between the TDLV and TRET temperatures on the part of the cycle time ΔTCYCLE regarding the period in which the compressor 12 is on, as the temperature difference ΔTCH is null when the compressor 12 is off (block 205), and the fraction of load FL being sought is calculated as the ratio between the mean values ΔTQmean and ΔTCHmean (block 206),

$$FL = \frac{\Delta TQmean}{\Delta TCHmean} \ . \tag{9}$$

The formula (9) follows directly from the previously given definition of fraction of load.

Figure 5 shows a portion of a flow chart that describes the phase of estimating the installation parameter k, indicated by block 200 in Figure 4, in greater detail.

The installation parameter k is estimated on the basis of a formula obtained from an energy balance equation in terms of temperature similar to equation (5) and expressed as a function of temperatures for which there are measurements, or rather of the delivery temperature TDLV and the return temperature TRET. This formula has the following form:

$$k(t) = \frac{TDLV(t - \frac{\tau 1}{2}) - TRET(t + \frac{\tau 1}{2}) - TDLV(t + \tau 2) + TRET(t)}{\frac{dTDLV}{dt}(t + \tau 2)} \ , \tag{10}$$

where τ1 and τ2 are the heat propagation delays respectively introduced by the conductors of the hydronic circuit 15 and storage tank 19, assuming the outlet of the heat exchanger 11 as the source of a heat variation and t is the time at which the installation parameter k is estimated.

With reference to Figure 5, during each on-off cycle of the compressor 12, the real periods of operation Δt_ON_real and stoppage Δt_OFF_real are compared with each other (block 300). If the Δt_ON real period is greater than the Δt_OFF_real period, then the installation parameter k will be estimated just before switching off the compressor 12, or rather t = t_OFF - ε (block 301); otherwise, the installation parameter k will be estimated just before switching on the compressor 12, or rather t = t_ON - ε (block 302). The time shift ε is preferably equal to 5 seconds.

The heat propagation delay τ2 due to the storage tank 19 is calculated as the difference between the time of switching on t_ON and a first inversion time in which the first derivate of the delivery temperature TDLV passes from a positive value to a negative value (block 303). Instead, by calculating the difference between the time of switching on t_ON and a second inversion time in which the first derivate of the return temperature TRET passes from a positive value to a negative value, a heat propagation delay τ3 regarding the entire hydronic circuit 15 is obtained, or rather between the outlet and the inlet of the heat exchanger (block 304). Therefore, the heat propagation delay τ1 due to the conductors is given by τ1 = τ3 - τ2 (block 305).

It is evident that in the absence of the storage tank 19, we shall not have the related heat propagation delay τ2 and the propagation delay τ1 due to the conductors will be equal to τ3.

At this point, it is possible to apply formula (10) to calculate a value for the installation parameter k at time t (block 306).

Estimation of the installation parameter k in the above-described manner corresponds to an estimate of the capacity and mass flow characteristics of the hydronic circuit 15, which allows the estimate of the fraction of load FL to be automatically tuned to the characteristics of the system 1.

This operation is without doubt necessary for the first switch-on of the refrigerating machine 3 after it has been connected to a new system 1, but also during normal operation of the same system 1 to identify load variations due to the deactivation of one or more fan coils 2.

Figure 6 shows a portion of flow chart that describes the adjustment phase of the lower TLOW and upper THIG thresholds, indicated by block 113 in Figure 3, in greater detail.

This phase provides for the calculation of a first error parameter E∆t that defines the relative error between the real cycle period ∆t_TOT_real and the theoretical cycle period ∆t_TOT (block 500) :

$$E\Delta t = \frac{\Delta t\_TOT\_real - \Delta t\_TOT}{\Delta t\_TOT} \quad . \hspace{4cm} (11)$$

If the error E∆t is found to be negative (block 501), it means that the delivery differential DM is too small, or rather it does not allow the time constraints between successive switch-ons and/or switch-offs to be respected, and it is therefore necessary to increase it by an amount ∆DM, preferably equal to 0.2 °C (block 502); otherwise a new delivery differential DM value is determined in a manner such that this error E∆t tends to zero (block 503). In particular, the new delivery differential DM value is calculated using a numerical method to search for the zeroes of a function, known as the chord or secant method, by applying it to a target function constituted by the error E∆t as a function of the delivery differential DM. The purpose of this adjustment is to maximize the number of hourly switch-ons of the compressor 12 while respecting the mentioned time constraints.

In addition, a second error parameter ETDLV is calculated that defines the relative error between the mean delivery temperature TDLVmean and the set point TSET (block 504),

$$ETDLV = \frac{TDLVmean - TSET}{TSET} \hspace{4cm} (12)$$

and a new distribution ratio value R is determined such that this error ETDLV tends to zero (block 504). Similarly to what was performed for the delivery differential DM, a chord or secant method is used, applying it to a target function constituted by the error ETDLV as a function of the distribution ratio R. The purpose of this adjustment is to accelerate the convergence of the delivery temperature TDLV to the set point TSET.

At this point, the lower threshold TLOW and the upper threshold THIG are calculated in function of the distribution ratio R, the delivery differential DM and the set point TSET, via formula (1) and formula (2) respectively (block 506).

The dependency of the theoretical cycle period ∆t_TOT on the fraction of load FL ensures that the delivery differential DM, and therefore the position of the lower TLOW and upper THIG thresholds with respect to the set point TSET, are effectively adapted to the fraction of load FL.

It is worthwhile to note that the diagram of the principle of the refrigerating machine 3 shown in Figure 1 can also generically describe a machine suited to heat the service fluid 5 for the purpose of heating the environments in which the fan coils 2 are placed, for example a refrigerating machine 3 of the type operating as a heat pump. In this type of refrigerating machine 3, the compressor 12 is configured so as to perform the refrigeration cycle in the opposite sense to that previously described, or rather in a manner for which the heat exchanger 11 functions as a condenser to transfer heat from the working fluid 7 to the service fluid 5 and the heat exchanger 13 functions as an evaporator.

The method for regulating the delivery temperature TDLV of the service fluid 5 in accordance with the present invention is therefore also applicable in the case in which the refrigerating machine 3 is suited to heat the service fluid 5, it being sufficient to simply invert the mechanism of some of the described phases and change the value of some parameters, and in particular:

- if the measurement of the delivery temperature TDLV exceeds the upper threshold THIG, then the compressor 12 is switched off;
- if the measurement of the delivery temperature TDLV is less than the lower threshold TLOW, then the compressor 12 is switched on; and
- the default value DMdef of the differential DM is preferably equal to 6 °C.

The main advantage of the above-described method for regulating the delivery temperature TDLV with respect to known art is to increase the overall efficiency of the system 1, whilst still maintaining good precision in regulating the delivery temperature TDLV itself.

Indeed, the adaptation of the differential DM defined by the two delivery temperature thresholds TLOW, THIG

7

to the estimated fraction of load FL allows the number of hourly switch-ons of the compressor 12 to be maximized within the time constraints between successive switch-ons and/or switch offs and the adjustment of the distribution ratio R allows the mean delivery temperature TDLV to converge more rapidly towards the set point TSET.

Another advantage is to allow the automatic adaptation of the refrigerating machine 3 to the type of system 1 in which it is installed and to rapidly identify cooling/heating load variations due to the deactivation of one or more fan coils 2, thanks to the estimation operation of the installation parameter k that expresses the capacity and flow characteristics of the system 1.

Finally, the possibility of switching from the regulation of a service fluid to be cooled to that of a service fluid to be heated by simply changing certain parameters, renders the method easy to implement in the electronic control unit 24 of any refrigerating machine 3 of the reversible type, i.e. fitted with an reverse valve placed along the internal circuit 6 for reversing the refrigeration cycle so as to allow cooling mode or heating mode operation.

**Claims**

1. Method for regulating the delivery temperature (TDLV) of a service fluid (5) in output from a refrigerating machine (3) of an air-conditioning system (1), which comprises fan coils means (2) and a service circuit (15) comprising a delivery branch (16) for the circulation of the service fluid (5) from the refrigerating machine (3) to the fan coils means (2) and a return branch (17) for the return of the service fluid (5) in input to the refrigerating machine (3); the refrigerating machine (3) comprising a compressor (12); the method comprising:

   - comparing (102, 103) a delivery temperature measurement (TDLV) with a pair of delivery temperature thresholds (TLOW, THIG) positioned in a certain manner with respect to a delivery temperature set point (TSET); and
   - switching the compressor (12) on and off (104, 105) on the basis of this comparison, such that the delivery temperature (TDLV) converges to said set point (TSET);

   and being **characterized in that** it further comprises:

   - adjusting (109, 111-113) the position of the thresholds (TLOW, THIG) with respect to the set point (TSET) as a function of an estimate of the cooling/heating load (FL) of the service circuit (15).

2. Method according to claim 1, in which said adjustment (109, 111-113) of the position of the thresholds (TLOW, THIG) with respect to the set point (TSET) as a function of an estimate of the cooling/heating load (FL) takes place in correspondence to a switch-on event of the compressor (12).

3. Method according to claim 1 or 2, in which said thresholds (TLOW, THIG) define a delivery temperature differential (DM) that comprises said delivery temperature set point (TSET); adjusting (109, 111-113) the position of the thresholds (TLOW, THIG) with respect to the set point (TSET) as a function of an estimate of the cooling/heating load (FL), comprising:

   - adapting (109, 111, 112, 500-503) the differential (DM) to the estimate of the cooling/heating load (FL).

4. Method according to claim 2, in which adapting (109, 111, 112, 500-503) the differential (DM) to the estimate of the cooling/heating load (FL) comprises:

   - determining (109) a real cycle period ($\Delta t\_TOT\_real$) for each on-off cycle of the compressor (12);
   - determining (112) a theoretical cycle period ($\Delta t\_TOT$) based on the estimated cooling/heating load (FL);
   - determining (500) a first relative error ($E\Delta t$) between the real cycle period ($\Delta t\_TOT\_real$) and the theoretical cycle period ($\Delta t\_TOT$); and
   - determining (503) a new value for said differential (DM) such that this first relative error ($E\Delta t$) tends to zero.

5. Method according to claim 4, in which adapting (109, 111, 112, 500-503) the differential (DM) to the estimate of the cooling/heating load (FL) comprises:

   - providing (111) an estimate of fraction of load (FL) with reference to a maximum deliverable power of the refrigerating machine (3);

   said theoretical cycle period ($\Delta t\_TOT$) being determined in function of the fraction of load (FL) such that the time constraints (Δt_ON_min, Δt_OFF_min, Δt_ON_ON min) between successive switch-ons and/or switch-offs of said compressor (12) are respected.

6. Method according to claim 4 or 5, in which adapting (109, 111, 112, 500-503) the differential (DM) to the estimate of the cooling/heating load (FL) comprises:

   - in the case where said first relative error (EΔt) is negative, determining (502) a new value for said differential (DM) as the sum of the previous value of the differential (DM) and a predetermined differential increment predetermined differential increment (ΔDM).

7. Method according to claim 6, in which said differential increment (ΔDM) is equal to 0.2 °C.

8. Method according to one of the previous claims, in which adjusting (109 and 111-103) the position of the thresholds (TLOW, THIG) with respect to the set point (TSET) as a function of an estimate of the cooling/heating load (FL) comprises:

   - estimating (111) the cooling/heating load in terms of fraction of load (FL) with reference to a maximum deliverable power of the refrigerating machine (3) by processing, via Kalman filtering, measurements of said delivery temperature (TDLV) and measurements of a return temperature (TRET) of said service fluid (5) in input to said refrigerating machine (3).

9. Method according to claim 8, in which estimating (111) the cooling/heating load in terms of fraction of load (FL) comprises:

   - acquiring (201) delivery (TDLV(n)) and return (TRET(n)) temperature measurement samples according to a sampling period (ts);
   - estimating (202) a first temperature difference (ΔTQ) defined between the inlet and outlet of said fan coils (2) by processing said measurement samples (TDLV(n), TRET (n)) via a discrete Kalman filter that expresses an energy balance of said air-conditioning system (1) as a system in discrete state space; and
   - calculating (204-206) the fraction of load (FL) as a function of said first temperature difference (ΔTQ) and a second temperature difference (ΔTCH) defined as the difference between said delivery temperature (TDLV) and said return temperature (TRET).

10. Method according to one of the previous claims, in which adjusting (109 and 111-113) the position of the thresholds (TLOW, THIG) with respect to the set point (TSET) as a function of an estimate of the cooling/heating load (FL) comprises:

   - tuning (200) the estimate of the cooling/heating load (FL) as a function of an estimate of capacity and mass flow characteristics of said service circuit (15).

11. Method according to claim 10, in which tuning the estimate of the cooling/heating load (FL) comprises:

   - estimating (200) an installation parameter (k) proportional to the density (ρ) of the service fluid (5) and the volume (Vtot) of said service circuit (15) and inversely proportional to the mass flow (m) of said service circuit (15).

12. Method according to one of the previous claims, additionally comprising:

   - adjusting (110, 113) the position of the thresholds (TLOW, THIG) with respect to the set point (TSET) as a function of measurements of said delivery temperature (TDLV).

13. Method according to claim 12, in which said adjustment (110, 113) of the position of the thresholds (TLOW, THIG) with respect to the set point (TSET) as a function of measurements of said delivery temperature (TDLV) takes place in correspondence to a switch-on event of the compressor (12).

14. Method according to claim 12 or 13, in which said thresholds (TLOW, THIG) define a delivery temperature differential (DM) that comprises said delivery temperature set point (TSET); said differential (DM) being divided between the two thresholds (TLOW, THIG) with respect to the set point (TSET) via a distribution ratio (R); adjusting (110, 113) the position of the thresholds (TLOW, THIG) with respect to the set point (TSET) as a function of said measurements of said delivery temperature (TDLV), comprising:

- regulating (110, 504, 505) the distribution ratio (R) based on measurements of said delivery temperature (TDLV).

15. Method according to claim 14, in which regulating (110, 504, 505) the distribution ratio (R) based on said measured delivery temperature (TDLV) comprises:

- determining (110) a mean delivery temperature (TDLVmean) for an on-off cycle of said compressor (12);
- determining (504) a second relative error (ETSET) between the mean delivery temperature (TDLVmean) and said set point (TSET); and
- determining (505) a new value for said distribution parameter (R) such that the second relative error (ETSET) tends to zero.

16. Method for regulating the delivery temperature (TDLV) of a service fluid (5) in output from a refrigerating machine (3) of an air-conditioning system (1), which comprises fan coils means (2) and a service circuit (15) comprising a delivery branch (16) for the circulation of the service fluid (5) from the refrigerating machine (3) to the fan coils means (2) and a return branch (17) for the return of the service fluid (5) in input to the refrigerating machine (3); the refrigerating machine (3) comprising a compressor (12); the method comprising:

- comparing (102, 103) a delivery temperature measurement (TDLV) with a pair of delivery temperature thresholds (TLOW, THIG) positioned in a certain manner with respect to a delivery temperature set point (TSET); and
- switching the compressor (12) on and off (104, 105) on the basis of this comparison so that the delivery temperature (TDLV) converges to said set point (TSET);

and being **characterized in that** it further comprises:

- adjusting (110, 113) the position of the thresholds (TLOW, THIG) with respect to the set point (TSET) as a function of measurements of said delivery temperature (TDLV).

17. Method according to claim 16, further comprising:

- adjusting (109 and 111-113) the position of the thresholds (TLOW, THIG) with respect to the set point (TSET) as a function of an estimate of the cooling/heating load (FL) of the service circuit (15).

18. Control device for a refrigerating machine (3), the control device (20) comprising first temperature sensor means (21) to measure the delivery temperature (TDLV) of a service fluid (5) in output from the refrigerating machine (3) and a control unit (24) suited to control the refrigerating machine (3) in a manner such that the delivery temperature (TDLV) converges to a set point (TSET), and being **characterized in that** it comprises second temperature sensor means (22) to measure the return temperature (TRET) of the service fluid (5) in input to the refrigerating machine (3) and **in that** the control unit (24) is configured to implement the method in accordance with one of the claims 1 to 17.

19. Refrigerating machine (3) comprising a compressor (12) and a control device (20) for switching the compressor (12) on and off, based on a measurement of the delivery temperature (TDLV) of a service fluid (5) in output from the refrigerating machine (3), and **characterized in that** the control device (20) is of the type claimed by claim 18.

Fig. 1

Fig. 2

Fig. 3

## Fig. 4

```
    ┌─────────────────┐
    │   Estimating k  │──── 200
    └─────────────────┘
            │
    ┌─────────────────┐
    │  TDLV(n), TRET(n)│──── 201
    └─────────────────┘
            │
    ┌─────────────────┐
    │  Etimating ΔTQ  │──── 202
    │    (Kalman)     │
    └─────────────────┘
            │
    ┌─────────────────┐
    │ Low-pass filtering│──── 203
    └─────────────────┘
            │
    ┌─────────────────┐
    │    ΔTQmean      │──── 204
    └─────────────────┘
            │
    ┌─────────────────┐
    │    ΔTCHmean     │──── 205
    └─────────────────┘
            │
    ┌─────────────────┐
    │      FL=        │
    │ ΔTQmean / ΔTCHmean│──── 206
    └─────────────────┘
            │
```

111

## Fig. 5

```
        ┌──────────────┐              ┌──────────────┐
   300──│ Δt_ON_real > │──── YES ────│ t = t_ON + ε │──── 301
        │ Δt_OFF_real ?│              └──────────────┘
        └──────────────┘
            │
    ┌──────────────┐
    │ t = t_OFF + ε│──── 302
    └──────────────┘
            │
    ┌──────────────┐
    │      τ2      │──── 303
    └──────────────┘
            │
    ┌──────────────┐
    │      τ3      │──── 304
    └──────────────┘
            │
    ┌──────────────┐
    │  τ1 = τ3 - τ2│──── 305
    └──────────────┘
            │
    ┌──────────────┐
    │     K(t)     │──── 306
    └──────────────┘
            │
```

200

## Fig. 6

```
    ┌──────────────┐
    │  EΔt = f(FL) │──── 500
    └──────────────┘
            │
        ┌──────────┐                    ┌──────────────────┐
   501──│  EΔt < 0?│──── YES ──── 502 ──│ new DM = DM + ΔDM │
        └──────────┘                    └──────────────────┘
            │ NO
    ┌──────────────────┐
    │ new DM = f(EΔt→0) │──── 503
    └──────────────────┘
            │
    ┌──────────────────┐
    │ ETSET = f(TDLVmean)│──── 504
    └──────────────────┘
            │
    ┌──────────────────┐
    │ new R = f(ETSET→0)│──── 505
    └──────────────────┘
            │
    ┌────────────────────────┐
    │ THIG = TSET + DM·R      │──── 506
    │ TLOW = TSET – DM·(1-R)  │
    └────────────────────────┘
            │
```

113

**European Patent Office**

## EUROPEAN SEARCH REPORT

Application Number

EP 07 42 5350

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br>A | JP 60 066039 A (SANYO ELECTRIC CO; TOKYO SANYO ELECTRIC CO)<br>16 April 1985 (1985-04-16)<br>* figures 3,5,6 * | 1,3<br><br>18,19<br>2,8,10,<br>12,16 | INV.<br>F24F11/00<br>F24F11/06<br>F25B49/02 |
| Y | JP 2003 336913 A (DAIKIN IND LTD)<br>28 November 2003 (2003-11-28)<br>* the whole document * | 18,19 | |
| X | JP 05 296516 A (OSAKA GAS CO LTD; NORITZ CORP) 9 November 1993 (1993-11-09)<br>* the whole document * | 1,16 | |
| A | JP 09 196422 A (NIPPON P MAC KK)<br>31 July 1997 (1997-07-31) | | |
| A | JP 63 163725 A (MITSUBISHI ELECTRIC CORP)<br>7 July 1988 (1988-07-07) | | |
| A | JP 56 010643 A (MITSUBISHI ELECTRIC CORP)<br>3 February 1981 (1981-02-03) | | TECHNICAL FIELDS SEARCHED (IPC)<br><br>F25B<br>F24F |
| A | JP 2002 022337 A (SMC CORP)<br>23 January 2002 (2002-01-23) | | |
| A | JP 57 174639 A (HITACHI LTD)<br>27 October 1982 (1982-10-27) | | |

The present search report has been drawn up for all claims

| Place of search | Date of completion of the search | Examiner |
|---|---|---|
| The Hague | 8 January 2008 | de Graaf, Jan Douwe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5350

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2008

| Patent document cited in search report | | Publication date | Patent family member(s) | | Publication date |
|---|---|---|---|---|---|
| JP 60066039 | A | 16-04-1985 | NONE | | |
| JP 2003336913 | A | 28-11-2003 | JP | 3693038 B2 | 07-09-2005 |
| JP 5296516 | A | 09-11-1993 | NONE | | |
| JP 9196422 | A | 31-07-1997 | JP | 2901911 B2 | 07-06-1999 |
| JP 63163725 | A | 07-07-1988 | NONE | | |
| JP 56010643 | A | 03-02-1981 | JP<br>JP | 1257745 C<br>59034257 B | 29-03-1985<br>21-08-1984 |
| JP 2002022337 | A | 23-01-2002 | NONE | | |
| JP 57174639 | A | 27-10-1982 | NONE | | |

EPO FORM P0459

For more details about this annex : see Official Journal of the European Patent Office, No. 12/82